**Europäisches Patentamt**

**European Patent Office**

**Office européen des brevets**

(19)

(11) Numéro de publication: **0 060 861 B1**

(12) # FASCICULE DE BREVET EUROPEEN

(45) Date de publication du fascicule du brevet:
**29.08.84**

(51) Int. Cl.³: **B 60 R 9/12**

(21) Numéro de dépôt: **81902652.7**

(22) Date de dépôt: **16.09.81**

(86) Numéro de dépôt international:
**PCT/CH 81/00104**

(87) Numéro de publication internationale:
**WO 82/00981 (01.04.82 Gazette 82/9)**

(54) **PORTE-SKIS POUR VEHICULE AUTOMOBILE.**

(30) Priorité: **24.09.80 CH 7147/80**

(43) Date de publication de la demande:
**29.09.82 Bulletin 82/39**

(45) Mention de la délivrance du brevet:
**29.08.84 Bulletin 84/35**

(84) Etats contractants désignés:
**AT DE FR GB SE**

(56) Documents cités:
**EP - A - 0 005 811**
**US - A - 3 719 297**

(73) Titulaire: **CORNIOLEY, Raymond, Arc-en-Ciel 7, CH-2300 La Chaux-de-Fonds (CH)**

(72) Inventeur: **CORNIOLEY, Raymond, Arc-en-Ciel 7, CH-2300 La Chaux-de-Fonds (CH)**

(74) Mandataire: **Marer, Joseph, c/o Peruhag Case postale 2050, CH-3001 Berne (CH)**

BUNDESDRUCKEREI BERLIN

## Description

La présente invention a pour objet un porte-skis pour véhicule automobile, comprenant deux supports destinés à être fixés dans les gouttières du véhicule et quatre étriers de fermeture, soumis à l'action de ressorts, montés pivotants sur les supports et susceptibles d'emprisonner au moins deux paires de skis, chaque support portant un palier sur lequel est montée rotative l'extrémité libre d'un arbre d'accouplement qui s'étend entre les supports et à angle droit par rapport à eux et qui est muni, à proximité des paliers, d'une came agissant sur un levier à bec susceptible de pivoter autour d'un axe.

Des porte-skis de ce genre sont connus, par exemple du brevet US-A-3 719 297. Lorsque l'arbre d'accouplement est pivoté, il agit sur un levier à bec pour dégager son bec d'un cran d'arrêt en bout de came.

Ce porte-skis est muni de serrures de sûreté pour assurer son verrouillage. Lorsqu'il pleut ou qu'il neige, l'humidité s'infiltre dans les serrures de sûreté. Par de grands froids, ces serrures gèlent et ne se laissent plus ouvrir.

La présente invention a pour but de remédier à ces inconvénients et de fournir un porte-skis sans serrure de sûreté, mais qui ne se laisse ouvrir que lorsque l'extrémité libre d'un levier coudé peut traverser le plan formé par la paroi du véhicule et pénétrer à l'intérieur dudit véhicule pour libérer des étriers qui retiennent les skis.

Le porte-skis selon l'inventions est caractérisé en ce que l'axe du levier à bec est logé dans un rail en forme de U du support et est situé en dessous d'un cran d'arrêt porté par l'étrier de fermeture, ledit levier à bec pivotant lorsque l'arbre d'accouplement est actionné par un levier coudé, muni d'un maneton et monté sur un renforcement de l'arbre d'accouplement, l'ouverture de l'étrier de fermeture n'étant rendue possible que par ce que le levier coudé peut pivoter de plus de 180° et que son extrémité libre peut traverser le plan formé par la paroi latérale du véhicule et pénétrer à l'intérieur dudit véhicule.

Le dessin annexé représente, à titre d'exemple, une forme d'exécution du porte-skis objet de l'invention.

La fig. 1 est une vue d'une des moitiés du porte-skis, seule la partie de verrouillage étant représentée en coupe, et

la fig. 2 est une vue de côté du porte-skis de la fig. 1, les écrans de protection des pièces d'appui et des pattes de blocage des supports étant indiqués en traitspoints.

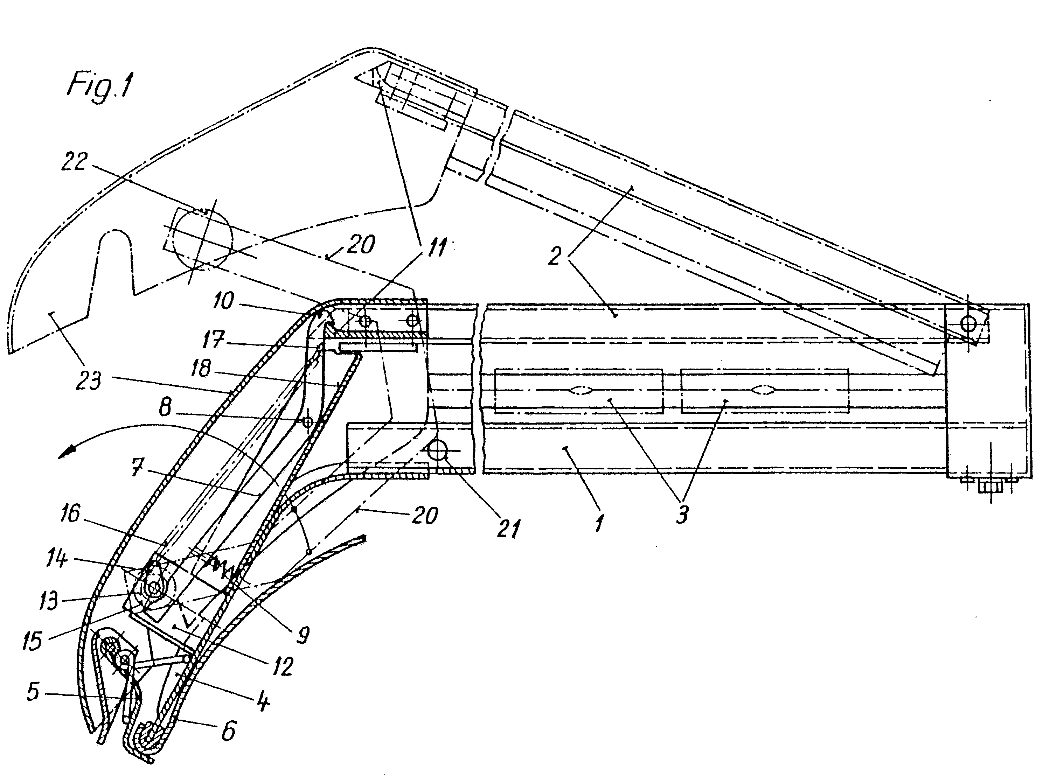

Le porte-skis représenté est destiné à être monté sur le toit d'un véhicule automobile et comprend deux supports parallèles 1. Dans la fig. 1, seule une des moitiés d'un des supports 1 a été représentée. Un étrier de fermeture 2, soumis à l'action d'un ressort (non représenté), est monté pivotant sur le support 1 et destiné à enserrer au moins deux paires de skis 3. Les supports 1 portent, à leurs extrémités libres, des pièces d'appui 4 munies de pattes de blocage 5 pour les verrouiller dans les gouttières du toit du véhicule automobile. Un levier 7 est monté pivotant autour d'un tourillon 8 logé dans un rail en forme de U 18 et un ressort à boudin 9 agit sur le bras inférieur du levier 7. L'extrémité supérieure du levier 7 présente un bec 10 destiné à coopérer avec le cran d'arrêt 11 d'une plaquette fixée sur l'étrier de fermeture 2, bec qui, lorsque le porte-skis est fermé, s'engage dans le cran d'arrêt 11 sous l'action du ressort à boudin 9.

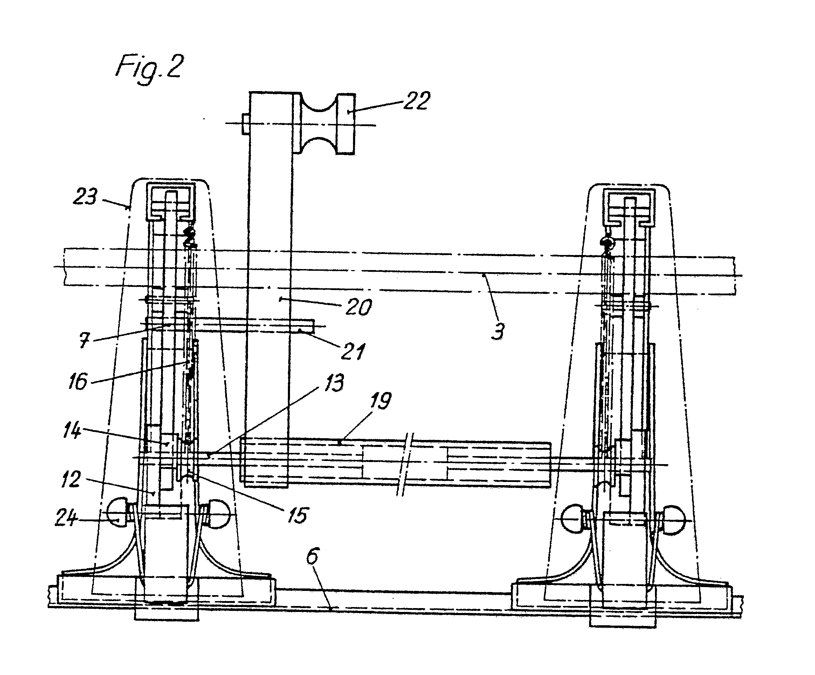

Un palier 12 est monté sur la pièce d'appui 4 du support 1. Le palier 12 reçoit l'extrémité d'un arbre d'accouplement 13 (voir fig. 2) qui s'étend à angle droit par rapport aux supports 1. Une came 14 est montée sur l'arbre d'accouplement 13, à proximité du palier 12, et une poulie à gorge 15 est disposée également à procimité de la came 14. Un ressort de traction 16 est attaché, par son extrémité inférieure, dans la gorge de la poulie 15 et son extrémité supérieure est engagée dans un ergot 17 que présente le rail en forme de U 18.

Un renforcement 19 de l'arbre d'accouplement 13 est prévu entre les deux supports 1 et porte un levier coudé 20 qui, en position de verrouillage du porte-skis, prend appui contre une butée 21 fixée sur un des supports 1. Dans la position de verrouillage du porte-skis, la came 14 n'agit pas sur le levier 7.

Si l'on fait pivoter le levier coudé 20 vers le bas, sa partie portant le maneton 22 vient buter contre la vitre latérale du véhicule. La came 14 ne peut pas agir suffisamment sur le levier 7 pour le faire pivoter et obliger le bec 10 de quitter le cran d'arrêt 11, de sorte que le porte-skis reste bloqué. Lorsque la vitre latérale est abaissée ou que la porte du véhicule est ouverte, l'extrémité libre du levier coudé 20 peut pénétrer à l'intérieur du véhicule et on peut faire pivoter l'arbre d'accouplement 13 de plus de 180°. A ce moment, la came 14 agit sur le levier 7, le fait pivoter et son bec 10 quitte le cran d'arrêt 11. Les étriers de fermeture 2 s'ouvrent sous l'action de leurs ressorts et les skis 3 sont libérés.

Les pattes de blocage 5 des pièces d'appui 4 des supports 1 sont rendues inaccessibles grâce à des écrans de protection 23. Ces derniers sont guidés par de petites capes semi-sphériques 24 montées sur les tourillons des pattes de blocage 5.

## Revendications

1. Porte-skis pour véhicule automobile, comprenant deux supports (1) destinés à être fixés dans les gouttières du véhicule et quatre étriers de fermeture (2), soumis à l'action de ressorts, montés pivotants sur les supports (1) et susceptibles d'emprisonner au moins deux paires de skis (3), chaque support (1) portant un palier (12) sur lequel est montée rotative l'extrémité libre d'un arbre d'accouplement (13) qui s'étend entre les supports et à angle droit par rapport à eux et qui est muni, à proximité des paliers (12), d'une came (14) agissant sur un levier à bec (7, 10) susceptible de pivoter autour d'un axe (8), caractérisé en ce que ledit axe est logé dans un rail en forme de U (18) du support et est situé en dessous d'un cran d'arrêt (11) porté par l'étrier de fermeture (2), ledit levier à bec pivotant lorsque l'arbre d'accouplement (13) est actionné par un levier coudé (20), muni d'un maneton (22) et monté sur un renforcement (19) de l'arbre d'accouplement (13), l'ouverture de l'étrier de fermeture (2) n'étant rendue possible que par ce que le levier coudé (20) peut pivoter de plus de 180° et que son extrémité libre peut traverser le plan formé par la paroi latérale du véhicule et pénétrer à l'intérieur dudit véhicule.

2. Porte-skis selon la revendication 1, caractérisé en ce que l'arbre d'accouplement (13) porte, à proximité de la came (14), une poulie à gorge (15) dans laquelle est fixée une des extrémités d'un ressort de traction (16), l'autre extrémité étant attachée à un ergot (17) porté par le rail en forme de U (18) dans lequel pivote le levier à bec (7, 10).

## Patentansprüche

1. Skihalter für Fahrzeuge, der zwei Träger (1) zum Befestigen in die Regenrinnen des Fahrzeuges und vier unter Federwirkung stehende Schließbügel (2) aufweist, die schwenkbar auf den Trägern (1) befestigt sind und zum Einklemmen von mindestens zwei Paar Skier (3) dienen, wobei jeder Träger (1) ein Lager (12) aufweist, in welchem das freie Ende einer Kupplungswelle (13) drehbar gelagert ist, welche Welle zwischen den Trägern und rechtwinklig zu diesen angeordnet ist und in der Nähe der Lager (12) einen Nokken (14) aufweist, der auf einen, um eine Achse (8) drehbaren Schnabelhebel (7, 10) wirkt, dadurch gekennzeichnet, daß die genannte Achse in einer U-Schiene (18) des Trägers befestigt ist und unterhalb einer Haltekerbe (11) am Schließbügel (2) angeordnet ist, daß der genannte Schnabelhebel dann verschwenkbar ist, wenn die Kupplungswelle (13) von einem Kniehebel (20) betätigt ist, der mit einem Handgriff (22) versehen und auf einem verstärkten Abschnitt (19) der Kupplungswelle (13) angebracht ist, und daß ein Öffnen des Schließbügels (2) nur dann möglich ist, wenn der Kniehebel (20) um mehr als 180° geschwenkt werden kann und sein freies Ende durch eine von der Seitenwand des Fahrzeuges gebildeten Ebene hindurch in das Fahrzeuginnere gelangen kann.

2. Skihalter nach Anspruch 1, dadurch gekennzeichnet, daß die Kupplungswelle (13) in der Nähe des Nockens (14) eine Nutrolle (15) trägt, in welcher eines der Enden einer Zugfeder (16) befestigt ist, und daß das andere Ende an einem vorspringenden Teil (17) der U-Schiene (18) befestigt ist, in welcher der Schnabelhebel (7, 10) schwenkbar ist.

## Claims

1. Ski rack for a motor vehicle, comprising two supports (1) for fixing in the roof rain-traps of the vehicle and four spring-actuated closure stirrups (2) which swing vertically on the supports (1) and allow at least two pairs of skis (3) to be clamped, each support (1) carrying a bearing (12) on which is mounted the free end of a coupling shaft (13) which extends between and at right angles to the supports and which is fitted, next to the bearings (12), with a cam (14) acting on a hook lever (7, 10) that can pivot around an axle (8), characterized by the fact that the said axle is housed in a U-shaped rail (18) of the support and is located below a catch (11) carried by the closure stirrup (2), the said hook lever pivoting when the coupling shaft (13) is actuated by a bent lever (20) fitted with a crank-pin (22) and mounted on a reinforcement (19) of the coupling shaft (13), the opening of the closure stirrup (2) only being made possible by the fact that the bent lever (20) can pivot more than 180° and that its free end can traverse the plane formed by the lateral wall of the vehicle and penetrate inside the said vehicle.

2. Ski rack according to claim 1, characterized by the fact that the coupling shaft (13) carries, next to the cam (14), a grooved pulley (15) in which one of the ends of a traction spring (16) is fixed, the other end being attached to a snug (17) carried by the U-shaped rail (18) in which the hook lever (7, 10) pivots.

Fig.1

Fig.2